# EUROPÄISCHE PATENTSCHRIFT

(11) **EP 1 518 615 B1**
(45) Veröffentlichungstag und Bekanntmachung des Hinweises auf die Patenterteilung: **31.01.2007**
(21) Anmeldenummer: 04009766.9
(22) Anmeldetag: 24.04.2004
(51) Int. Cl.: B21B 39/02, B21B 15/00, B21C 47/34

(54) **Vorrichtung zum Einführen von Bandmaterial und Besäumen der Bandkanten für Bandbearbeitungsmaschinen, insbesondere Feinband- und Folienwalzwerke**
Device for feeding strip material and for cutting strip-edges of strip material for machine tools, especially for thin strip rolling mills and for foil rolling mills
Dispositif pour l'alimentation du materiél en forme de bande et pour le rognage des bords de bande pour une machine d'usinage, en particulier pour des laminoirs de bande fine et pour des laminoirs de feuille

(30) Priorität: 25.09.2003 DE 20314840 U
(43) Veröffentlichungstag der Anmeldung: 30.03.2005
(73) Patentinhaber: ACHENBACH BUSCHHÜTTEN GmbH, 57223 Kreuztal (DE)
(72) Erfinder: Barten, Axel, Dipl.-Ing.(ETH), 57078 Siegen (DE); Marx, Axel, 57223 Kreuztal (DE); Schneider, Christian, 57462 Olpe (DE)
(74) Vertreter: Pürckhauer, Rolf

(56) Entgegenhaltungen:
- EP-B- 0 642 865
- DE-A1- 2 514 164
- DE-A1- 2 534 622
- DE-A1- 3 600 372
- DE-A1- 10 054 761
- DE-C- 585 414
- JP-A- 49 034 459

## Beschreibung

In den Bandeinlauf eines aus der DE 25 14 164 A1 bekannten Quartowalzwerks zum Walzen dünner Bänder ist hinter der Abwickelhaspel, von der das zu walzende Feinband abläuft, eine senkrecht zur Bandlaufrichtung anhebbare und absenkbare Spannrolle angeordnet, hinter der sich ein Besäummesser mit einer feststehenden, unterhalb der Bandführung angebrachten Messerwalze sowie einer oberhalb der Bandführung vorgesehenen Messerwalze befindet, die senkrecht zur Bandlaufrichtung anhebbar und absenkbar ist. Anschließend an das Besäummesser ist in den Bandeinlauf ein erster feststehender Luftkissenförderer mit zwei Fördereinheiten in den Raum unterhalb der Bandführung eingebaut, die quer zur Bandlaufrichtung und im Abstand voneinander angeordnet sind und die die maximale Bandbreite erfassen. Anschließend an den ersten Luftkissenförderer durchläuft das Band eine Rolleneinheit mit zwei in Bandlaufrichtung im Abstand voneinander angeordneten Umlenkrollen sowie einer Spannrolle, die über die Bandführung anhebbar und in den Raum zwischen den Umlenkrollen unterhalb der Bandführung zum Spannen des Bandes absenkbar ist. Beim Einführen des Bandes in den Walzspalt wird der Raum zwischen den beiden Umlenkrollen der Rolleneinheit von einem zweiten Luftkissenförderer eingenommen, während sich die Spannrolle der Rolleneinheit in der Ruhestellung oberhalb der Bandführung befindet. Die Spannrolle der Rolleneinheit wird mittels einer Hubvorrichtung in die Arbeitsstellung abgesenkt, die gleichzeitig zum Anheben des zweiten Luftkissenförderers aus der Ruhestellung unterhalb der Bandführung in die Arbeitsstellung zwischen die beiden Umlenkrollen der Rolleneinheit und Absenken des zweiten Luftkissenförderers in die Ruhestellung dient. Vor dem Einführen des Bandes in das Quartowalzgerüst werden die hinter der Abwickelhaspel angeordnete Spannrolle und die obere Messerwalze in die Ruhestellung angehoben, und der zweite Luftkissenförderer wird mittels der zugehörigen Hubvorrichtung in seine Betriebsstellung zwischen die beiden Umlenkrollen der Rolleneinheit gefahren, wobei gleichzeitig die Spannrolle der Rolleneinheit in die Ruhestellung gelangt. Nach Inbetriebnahme der Luftkissenförderer wird der Bandanfang des von der angetriebenen Abwickelhaspel ablaufenden Bandes von Hand bis zu dem ersten Luftkissenförderer geführt und von diesem weiter in Bandlaufrichtung bis zum nächsten Luftkissenförderer zwischen den beiden Umlenkrollen der Rolleneinheit vorwärts bewegt und von diesem zum Walzspalt transportiert, in dem der Bandanfang von den rotierenden Arbeitswalzen erfaßt wird. Danach werden die Luftkissenförderer abgeschaltet. Anschließend werden die Spannrolle hinter der Abwickelhaspel und die obere Messerwalze des Besäummessers in die Betriebsstellung abgesenkt und die Spannrolle der Rolleneinheit wird ebenfalls aus ihrer Ruhestellung unter Nachgeben des Bandzuges im Walzband in die Betriebsstellung zwischen die beiden Umlenkrollen der Rolleneinheit gefahren, wobei gleichzeitig der zweite Luftkissenförderer in die Ruhestellung abgesenkt wird. Danach wird das Walzwerk in Betrieb genommen, wobei die Rolleneinheit für eine plane Einführung des Walzbandes in den Walzspalt sorgt.

Besäummesser und Bandeinführvorrichtung im Bandeinlauf dieses bekannten Walzwerks für Feinbandmaterial, die in Bandlaufrichtung hintereinander angeordnet sind, erfordern einen verhältnismäßig großen Platzbedarf, so daß der Abstand zwischen der Abwickelhaspel und dem Walzgerüst zwischen drei und fünf Metern liegt. Ein derart großer Abstand zwischen Abwickelhaspel und Walzgerüst wirkt sich negativ auf die Bandzug- und die Bandplanheitsregelung aus.

Ferner finden gemäß einem Hinweis in der DE 25 14 164 A1 als Fördervorrichtung zum Einführen von Folienband in Walzwerke Linearmotoren Verwendung, die aus einem Statorgenerator bestehen. Das Folienband wird durch einen Luftspalt geführt und als Motoranker durch die auftretenden Magnetkräfte vorwärts transportiert. Diese Linearmotoren weisen den Nachteil auf, daß die magnetischen Anziehungskräfte in Richtung des Statorgenerators im Vergleich zu den das Folienband vorwärts bewegenden magnetischen Kräften sehr groß sind. Ein weiterer Nachteil ist darin begründet, daß der Luftspalt zwischen Statorgenerator und Folienband zur Vermeidung von Beschädigungen des Bandes groß gehalten werden muß. Diese Maßnahme trägt zur Verteuerung der Fördervorrichtung bei. Nachteilig ist weiterhin die Abhängigkeit des Wirkungsgrades des Linearmotors von der elektrischen Leitfähigkeit des Bandmaterials. Außer dem teuren Herstellungspreis des Linearmotors kommt als weiterer Mangel hinzu, daß aufwendige Schutzvorrichtungen vorgesehen werden müssen, um das Eindringen von Walzöl in den Motor, das diesen außer Betrieb setzt, zu verhindern.

Die vorbeschriebenen Bandeinführvorrichtungen sind alle mit dem Nachteil behaftet, daß der Transport des Bandanfangs von dem auf der Trommel der Abwickelhaspel sitzenden Coil zur Fördervorrichtung auf umständliche Weise von Hand durchgeführt werden muß. Ein Transport des Bandanfangs von Hand ist nur noch unter großen Schwierigkeiten mit erheblichem Zeitaufwand möglich, wenn zur Steigerung der Produktionsleistung der Walzwerke durch eine Verkürzung der Stillstandszeiten Bandcoils mit einem Durchmesser bis zu zwei Meter und einer Breite über zwei Meter zum Einsatz kommen.

Die DE 36 00 372 C2 beschreibt eine Fördervorrichtung zum Einführen von Bandmaterial in Feinbandwalzwerke, mit einem im Bereich des Bandeinlaufs in Bandlaufrichtung zwischen einer Vorbereitungsstation und einer Abwickelhaspel auf einer Schiene unterhalb der Bandlaufebene in Bandlaufrichtung verfahrbaren, motorisch angetriebenen Coilwagen mit einer Hubvorrichtung zum Anheben und Absenken des Bandcoils senkrecht zur Bandlaufebene. In der Vorbereitungsstation sind an den beiden Längsseiten der Fahrbahn des Coilwagens zwei gegenüberliegende, quer zur Bandlaufrichtung verstellbare Stütz- und Treibrollen angeordnet, die zum Positionieren des Bandcoils und Einfädeln des Bandanfangs in eine Klemmvorrichtung unter die Enden der Coilhülse greifen. An einer Längsseite der Fahrbahn des Coilwagens ist oberhalb derselben ein Gerät, an dem die Klemmvorrichtung für den Bandanfang angebaut ist, auf einer Schiene mittels eines Antriebsmotors zwischen der Vorbereitungsstation und dem Bandeinlauf verfahrbar. Die Klemmvorrichtung ist um eine sich quer zur Bandlaufrichtung erstreckende Schwenkachse aus einer Aufnahmestellung zum Erfassen des Bandanfangs am Bandcoil im Wirkungsbereich einer in Bandlaufrichtung gesehen vor dem Coil stehenden Bedienungsperson über eine Überfahrposition über dem Bandcoil und eine Warteposition in eine Position zur Übergabe des Bandanfangs an eine vor dem Walzwerk befindliche Einführvorrichtung und in umgekehrter Richtung motorisch schwenkbar.

Aus der DE 25 34 622 A1 ist eine Bandeinführvorrichtung für Feinbandwalzwerke bekannt, die ein im Bereich des Bandeinlaufs auf Schienen oberhalb der Bandlaufebene in Bandlaufrichtung verfahrbares Transportgerät aufweist, an dem über die Bandbreite angeordnete Saugnäpfe oder ein Sauggurt aufgehängt sind, die den auf dem Coil liegenden Bandanfang erfassen und diesen zu einem vor einem Walzgerüst angeordneten Luftkissenförderer transportieren.

In der DE AS 11 63 760 ist eine Bandeinführvorrichtung für Walzwerke beschriebenen, bei der der Bandanfang, der durch eine an einem schwenkbaren Auslegerarm befestigte Andrückrolle auf dem Bandcoil gehalten wird, durch Magnete erfaßt wird, die auf Schlitten in Längsrichtung des Auslegers frei verfahrbar sind. Nach Einschalten der Abwickelhaspel werden die den Bandanfang haltenden Magnete mit dem Schlitten durch den Vortrieb des sich drehenden Coils zu einem Treibrollensatz gefahren, der den Bandanfang erfaßt und in ein Walzwerk einführt.

Diese Bandeinführvorrichtung eignet sich nicht für Feinbandwalzwerke, da wegen der fehlenden Eigensteifigkeit des Bandes die Schlitten mit den den Bandanfang haltenden Magneten durch den Vortrieb des sich drehenden Coils nicht vorwärts bewegt werden können und die Magnete beim Walzen von überwiegend unmagnetischem Bandmaterial aus Aluminium, Kupfer, Messing oder dergleichen Material ihre Greiferfunktion für den Bandanfang nicht ausüben können.

Besäummesser in Feinband- und Folienwalzwerken dienen dazu, bei Bedarf das zu walzende Bandmaterial durch Abtrennen eines Bandstreifens an einem oder beiden Bandrändern auf die erforderliche Bandbreite zu schneiden und zum anderen Bandränder, die durch den vorangegangenen Walzprozeß Rissen bekommen haben, abzutrennen, damit beim Aufbau des Bandzuges im nachfolgenden Walzprozeß nicht aufgrund der bereits im Randbereich vorhandenen Risse das Band durchreißt. Zum beidseitigen Besäumen von Walzrändern werden Kreismesserscheren eingesetzt, die zum Beispiel aus der EP 0 718 065 B1 und der EP 0 642 865 B1 sowie der DE 100 54 761 A1 sowie der DE 44 05 399 C2 bekannt sind.

Der Erfindung liegt die Aufgabe zugrunde, die bekannten Vorrichtungen zum Einführen von Bandmaterial und Besäumen der Bandkanten für Bandbearbeitungsmaschinen, insbesondere für Feinband- und Folienwalzwerke, im Hinblick auf eine Kompaktbauweise weiterzuentwickeln.

Diese Aufgabe wird erfindungsgemäß gelöst durch eine kombinierte Vorrichtung zum Einführen von einfachem und gedoppeltem Bandmaterial und Besäumen der Bandkanten mit den Merkmalen des Patentanspruchs 1.

Die Unteransprüche beinhalten vorteilhafte und zweckmäßige Weiterbildungen der Erfindung.

### Die Erfindung zeichnet sich durch folgende Vorteile aus:

Die kompakte Bauform, die durch die Kombination einer Bandeinführvorrichtung mit einer Besäumvorrichtung für die Bandkanten in einer Maschineneinheit erreicht wird, ermöglicht im Vergleich zu bekannten Feinband- und Folienwalzwerken eine erhebliche Verringerung des Abstandes zwischen der Abwickelhaspel für ein Bandcoil und dem Walzgerüst eines Walzwerkes. Daraus ergibt sich ein kurzer Bandlauf zwischen Abwickelhaspel und Walzgerüst, der sich positiv auf die Bandzugund Bandplanheitsregelung auswirkt. Die Zugänglichkeit der Besäumvorrichtung wird insbesondere bei einem verringerten Durchmesser des Bandcoils wesentlich verbessert. Durch die genaue Einstellbarkeit der Arbeitsposition der Besäumvorrichtung mittels des positionsüberwachten und/oder positionsgeregelten Antriebs des Transportgerätes der Bandeinführ- und Besäumvorrichtung kann das Schnittergebnis verbessert und optimiert werden. Schließlich führt die automatische Betriebsweise der Vorrichtung zu einer Verringerung der Coilwechselzeiten und einer Einsparung von Bedienungspersonal.

Die Erfindung ist nachstehend anhand von Zeichnungsfiguren erläutert, die folgendes darstellen:
- Fig. 1: eine Vorderansicht des Bandeinlaufbereichs eines Walzwerkes mit einer Bandeinführ- und Besäumvorrichtung, wobei die Abwickelhaspel mit Bandcoil nicht dargestellt ist,
- Fig. 2: einen Schnitt nach Linie II-II der Fig. 1 in der Bandaufnahmeposition der Haltevorrichtung der Einführ- und Besäumvorrichtung,
- Fig. 3: einen der Fig. 2 entsprechenden Schnitt der Fig. 1 in der Übergabeposition der Haltevorrichtung für das Band an die Vorschubeinrichtung der Einführ- und Besäumvorrichtung und einen Lufteintragetisch vor dem ersten Walzgerüst eines Walzwerkes sowie
- Fig. 4: einen Schnitt nach Linie IV-IV der Fig. 1 in der Betriebsposition der Besäumvorrichtung der Einführ- und Besäumvorrichtung.

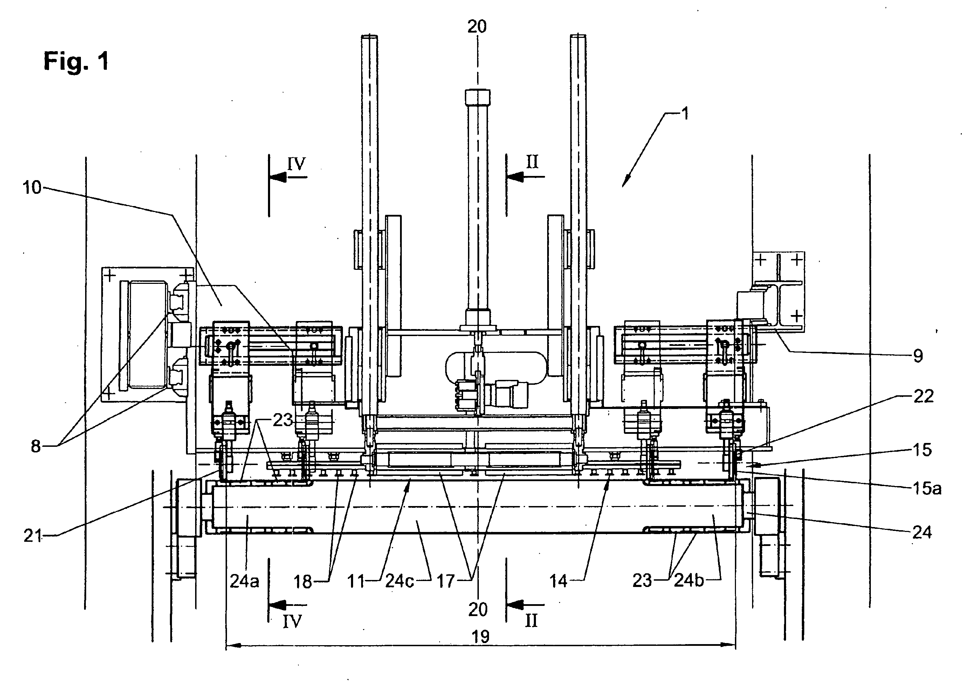

Hauptbestandteile der in den Figuren 1 bis 4 dargestellten Vorrichtung 1 zum Einführen von einfachem und gedoppeltem Bandmaterial 2 und Besäumen der Bandkanten für ein Feinband- bzw. Folienwalzwerk sind ein im Bereich des Bandeinlaufs 3 über der Bandlaufebene 4-4 zwischen einer Ausgangsstellung 10a über einer Abwickelhaspel 5 für ein Bandcoil 6 und einer Endstellung 10b mit Abstand vor dem ersten Walzgerüst 7 des Walzwerks auf Laufschienen 8, 9 in und entgegen der Bandlaufrichtung a verfahrbares Transportgerät 10 mit einem positionsüberwachten und/oder positionsgeregelten Antriebsmotor, eine an das Transportgerät 10 angebaute Vorschub- und Halteeinrichtung 11 für den Bandanfang 12 des auf der Trommel 13 der Abwickelhaspel 5 sitzenden Bandcoils 6 sowie eine Aufnahmevorrichtung 14 für den Bandanfang 12 und eine für die Bandkanten bestimmte Besäumvorrichtung 15, die an dem Transportgerät 10 angebracht sind.

Das Transportgerät 10 ist mit einer elektrischen, hydraulischen, pneumatischen oder mechanischen Verriegelung oder Klemmung für die vorgefahrene Endstellung 10b ausgerüstet, in der die Besäumvorrichtung 15 nach Einführen des Bandanfangs 12 in den Walzspalt 16 des Walzgerüstes 7 in die Betriebsstellung 15a gefahren wird.

Anstatt mittels einer Verriegelung oder Klemmung kann die Endstellung 10b des Transportgerätes 10 durch einen Anschlag festgelegt werden.

Die an das Transportgerät 10 angebaute Vorschub- und Haltevorrichtung 11 für den Bandanfang 12 wird durch eine anhebbare und absenkbare Andrück- und Vortriebrolle 17 mit einem Antriebsmotor gebildet, die quer zur Bandlaufrichtung a angeordnet ist.

Die Andrück- und Vortriebrolle 17 weist eine Kunststoffbeschichtung mit einer bestimmten Haftfähigkeit auf.

Die an dem Transportgerät 10 angebrachte Aufnahmevorrichtung 14 für den Bandanfang 12 umfaßt eine Anzahl von quer zur Bandlaufrichtung a angeordneten Saugnäpfen 18.

Die Bandaufnahmevorrichtung kann ferner als eine motorisch angetriebene, schwenkbare Klemmvorrichtung ausgebildet sein.

Desweiteren können Bandaufnahmevorrichtungen mit elektrostatischer Funktionsweise oder Adhäsionswirkung, die beispielweise durch ein Klebeband erreicht wird, zum Einsatz kommen.

Die Besäumvorrichtung 15 mit einstellbarer Besäumbreite 19 ist als Kreismesserschere mit zwei beidseits der senkrechten Mittelachse 20-20 des Transportgerätes 10 auf diesem angeordneten oberen Kreismessern 21, 22 mit einem Drehantrieb ausgebildet, die zur Einstellung der Breite der von dem zu walzenden Bandmaterial 2 des Coils 6 abzutrennenden Saumstreifen quer zur Bandlaufrichtung a verfahrbar und senkrecht zur Bandlaufebene 4-4 aus der Ruhestellung in die Betriebsstellung absenkbar sowie aus der Betriebsstellung in die Ruhestellung anhebbar sind und die mit den Untermessern 23 einer im Bandeinlauf 3 mit Abstand vor dem Walzgerüst 7 angeordneten Untermesserwelle 24 mit einem Drehantrieb zusammenwirken.

Die Untermesser 23 sind auf den beiden äußeren Abschnitten 24a, 24b der Untermesserwelle 24 angeordnet und der mittlere Abschnitt 24c der Untermesserwelle 24 wirkt als Gegenrolle mit der Andrück- und Vortriebrolle 17 der Vorschub- und Haltevorrichtung 11 für den Bandanfang 12 zusammen. Die Besäumvorrichtung 15 ist mit zwei auf dem Transportgerät 10 angeordneten, nicht dargestellten Kappvorrichtungen zum Anschneiden der von dem Bandmaterial 2 abzutrennenden Saumstreifen ausgerüstet.

Als Besäumvorrichtung kann abweichend von dem beschriebenen Ausführungsbeispiel sowohl eine feststehende Klinge als auch eine Brennschneidvorrichtung zum Einsatz kommen.

In walzrichtung a gesehen ist hinter der Untermesserwelle 24 der Besäumvorrichtung 15 eine Absaugvorrichtung 25 für die von dem Bandmaterial 2 abgetrennten Saumstreifen in den Bandeinlauf 3 eingebaut.

Die Absaugvorrichtung 25 für die Saumstreifen ist entsprechend der Besäumbreite 19 des Bandmaterials 2 quer zur Bandlaufrichtung a einstellbar.

Anstatt durch Absaugen können die abgeschnitten Saumstreifen durch Schwerkrafteinwirkung oder Aufwickeln abgeführt werden.

Zwischen der Absaugvorrichtung 25 und dem Walzgerüst 7 sind ein Lufteintragetisch 26, eine Rolleneinheit 27 mit zwei in Bandlaufrichtung a im Abstand voneinander angeordneten Umlenkrollen 28, 29 sowie einer Spann- bzw. Breidelrolle 30, die über die Bandlaufebene 4-4 anhebbar und in den Raum zwischen den beiden Umlenkrollen 28, 29 absenkbar ist, sowie ein zweiter Lufteintragetisch 31 vor dem Walzgerüst 7 in den Bandeinlauf 3 eingebaut.

### Die Einführ- und Besäumvorrichtung arbeitet wie folgt:

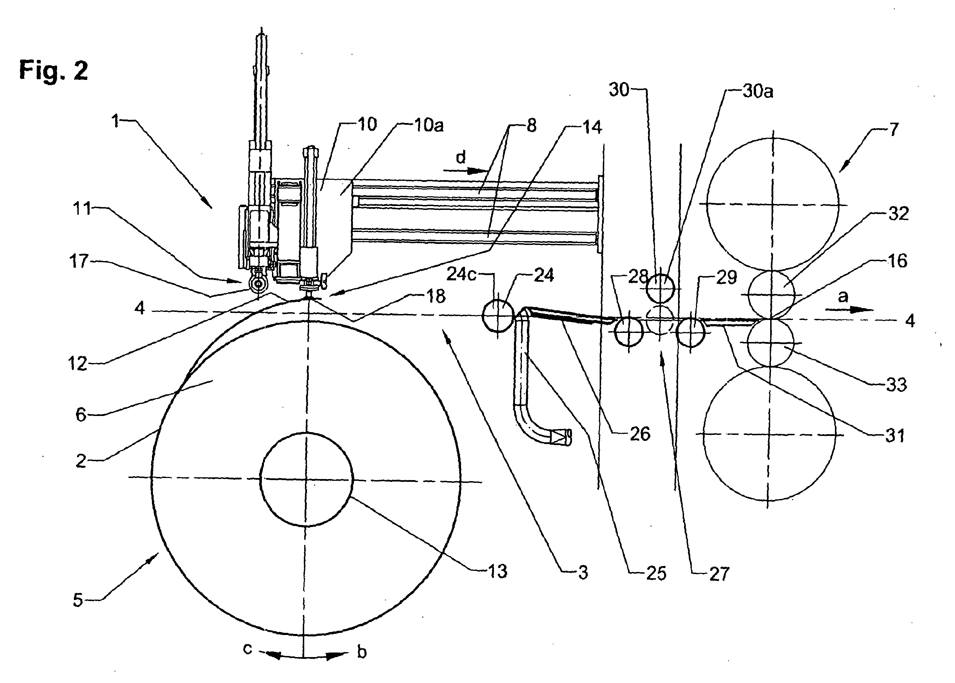

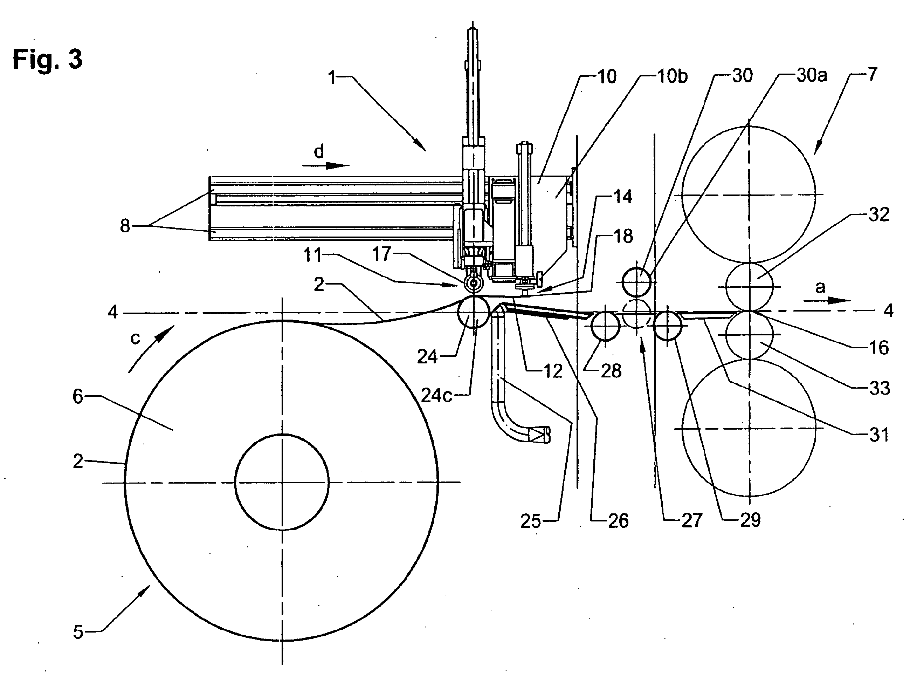

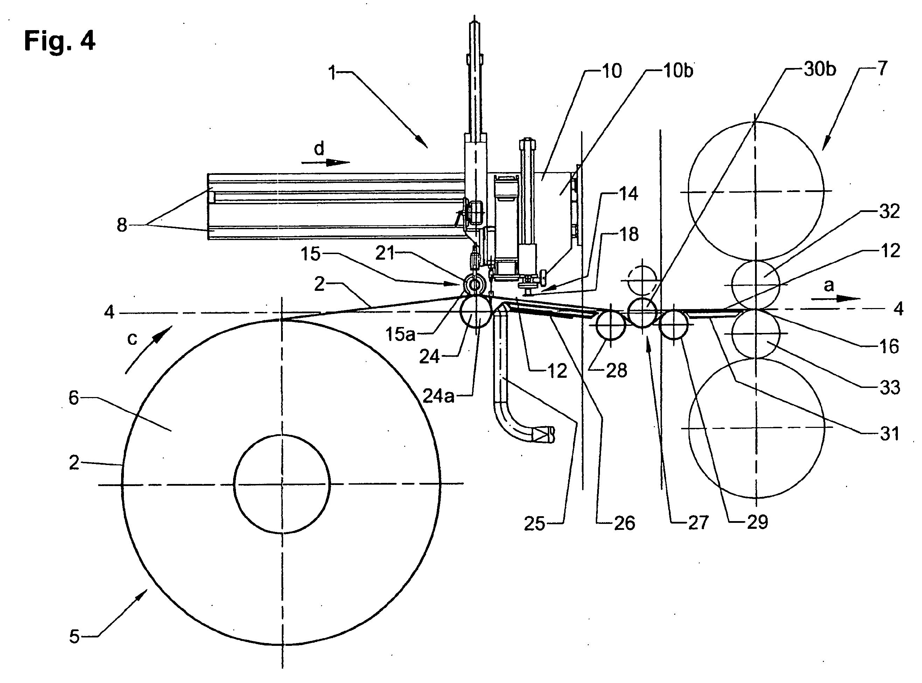

Zum Einführen des Bandanfangs 12 eines auf die Abwickelhaspel 5 im Bandeinlauf 3 eines Walzwerks aufgespannten Bandcoils 6 wird zunächst das Transportgerät 10 in die Ausgangsstellung 10a über die Abwickelhaspel 5 gefahren (Fig. 2). Anschließend werden die Andrück- und Vortriebrolle 17 der Vorschub- und Halteeinrichtung 11 auf das Coil 6 und die Aufnahmevorrichtung 14 mit den Saugnäpfen 18 in eine Stellung mit geringem Abstand über das Coil 6 abgesenkt. Nunmehr wird die Abwickelhaspel 5 mit dem Coil 6 so weit gegen den Uhrzeigersinn in Pfeilrichtung b gedreht, bis der Bandanfang 12 in den Bereich der Aufnahmevorrichtung 14 gelangt, durch die der Bandanfang 12 von dem Coil 6 abgehoben wird. Danach wird die Andrück- und Vortriebrolle 17 von dem Coil 6 abgehoben und das Transportgerät 10 wird in Pfeilrichtung d zum Walzgerüst 7 bei gleichzeitigem Drehen der Abwickelhaspel 5 im Uhrzeigersinn c in die Endstellung 10b zur Übergabe des Bandanfangs 12 an den der Untermesserwelle 24 der Besäumvorrichtung 15 nachgeordneten Lufteintragetisch 26 vorgefahren, wobei vor der Freigabe des Bandanfangs 12 durch die Saugnäpfe 18 der Aufnahmevorrichtung 14 die Andrück- und Vortriebrolle 17 gegen den als Gegenrolle wirkenden mittleren Abschnitt 24c der Untermesserwelle 24 abgesenkt wird (Fig. 3). Nunmehr wird mit Hilfe der motorisch angetriebenen Andrück- und Vortriebrolle 17 und der durch den ersten Lufteintragetisch 26 erzeugten Förderluft der Bandanfang 12 über die Rolleneinheit 27, deren Spannrolle 30 in die Ruhestellung 30a angehoben ist, sowie mittels der Förderluft des zweiten, vor dem Walzgerüst 7 angeordneten Lufteintragetisches 31 in den offenen Walzspalt 16 des Walzgerüstes gefördert. Nach dem Schließen des Walzspaltes 16 und dem Anwickeln des Bandanfangs 12 am nicht dargestellten Aufwickelhaspel wird die Spannrolle 30 der Rolleneinheit 27 in die Betriebsstellung 30b abgesenkt und nach dem Aufbau des Bandzuges wird die Besäumvorrichtung 15 in die Betriebsstellung 15a abgesenkt, wobei die oberen Kreismesser 21, 22 in Eingriff mit den Untermessern 23 der Untermesserwelle 24 gelangen und die an der Besäumschere der Besäumvorrichtung 15 befestigte, nicht dargestellte Kappvorrichtung den abzutrennenden Saumstreifen anschneidet. Nach Abschalten der Luftzuführung der Lufteintragetische 26, 31 sowie des Antriebs der Andrück- und Vortriebrolle 17 ist das Walzwerk betriebsbereit (Fig. 4).

## Patentansprüche

1. Vorrichtung (1) zum Einführen von einfachem und gedoppeltem Bandmaterial (2) und Besäumen der Bandkanten für Bandbearbeitungsmaschinen, insbesondere Feinband- und Folienwalzwerke, mit einem im Bereich des Bandeinlaufs (3) über der Bandlaufebene (4-4) zwischen einer Ausgangsstellung (10a) über einer Abwickelhaspel (5) für ein Bandcoil (6) und einer Endstellung (10b) mit Abstand vor einem Walzgerüst (7) in und entgegen der Bandlaufrichtung (a) verfahrbaren, motorisch angetriebenen Transportgerät (10), an das eine Vorschub- und Halteeinrichtung (11) für den Bandanfang (12) des auf der Trommel (13) der Abwickelhaspel (5) sitzenden Bandcoils (6), eine Aufnahmevorrichtung (14) für den Bandanfang (12) und eine Besäumvorrichtung (15) für die Bandkanten angebracht sind, wobei in der Ausgangsstellung (10a) des Transportgerätes (10) die Aufnahmevorrichtung (14) den Bandanfang (12) von dem auf der Abwickelhaspel (5) gelagerten Bandcoil (6) abhebt und in der zum Walzgerüst (7) vorgefahrenen Endstellung (10b) des Transportgerätes (10) der Bandanfang (12) von der Aufnahmevorrichtung (14) an eine dem Walzgerüst (7) vorgeordnete Transporteinrichtung, z. B. einen Lufteintragetisch (26), übergeben und bedarfsweise mit Unterstützung der Vorschub- und Haltevorrichtung (11) in den Walzspalt (16) des Walzgerüstes (7) transportiert und anschließend in der Endstellung (10b) des Transportgerätes (10) die Besäumvorrichtung (15) in die Betriebsstellung (15a) gefahren wird.

2. Vorrichtung nach Anspruch 1, **gekennzeichnet durch** einen positionsüberwachten und/oder positionsgeregelten Antriebsmotor zum Verfahren des Transportgerätes (10).

3. Vorrichtung nach Anspruch 1 und 2, **gekennzeichnet durch** eine Verriegelung oder Klemmung des Transportgerätes (10) in der vorgefahrenen Endstellung (10b), in der die Besäumvorrichtung (15) aus der Ruhestellung in die Betriebsstellung (15a) gefahren wird.

4. Vorrichtung nach Anspruch 3, **gekennzeichnet durch** eine elektrische, hydraulische, pneumatische oder mechanische Verriegelung oder Klemmung des Transportgerätes (10) in seiner vorgefahrenen Endstellung (10b).

5. Vorrichtung nach Anspruch 1 oder 2, **gekennzeichnet durch** einen Anschlag zum Festsetzen des Transportgerätes (10) in der Endstellung (10b) für die Betriebsstellung (15a) der Besäumvorrichtung (15).

6. Vorrichtung nach einem der Ansprüche 1 bis 5, **dadurch gekennzeichnet, daß** die Vorschub- und Halteeinrichtung (11) für den Bandanfang (12) aus mindestens einer anhebbaren und absenkbaren Andrück- und Vortriebrolle (17) mit Antriebsmotor besteht, die quer zur Bandlaufrichtung (a) angeordnet ist.

7. Vorrichtung nach Anspruch 6, **gekennzeichnet durch** eine Kunststoffbeschichtung der Andrück- und Vortriebrolle (17) mit einer bestimmten Haftfähigkeit.

8. Vorrichtung nach einem der Ansprüche 1 bis 7, **dadurch gekennzeichnet, daß** die Bandaufnahmevorrichtung (14) aus Saugnäpfen (18) besteht.

9. Vorrichtung nach einem der Ansprüche 1 bis 7, **dadurch gekennzeichnet, daß** die Bandaufnahmevorrichtung (14) als motorisch angetriebene Klemmvorrichtung ausgebildet ist.

10. Vorrichtung nach Anspruch 9, **gekennzeichnet durch** eine Schwenkbarkeit der Klemmvorrichtung.

11. Vorrichtung nach einem der Ansprüche 1 bis 7, **gekennzeichnet durch** eine Bandaufnahmevorrichtung (14) mit elektrostatischer Funktionsweise.

12. Vorrichtung nach einem der Ansprüche 1 bis 7, **gekennzeichnet durch** eine Bandaufnahmevorrichtung (14) mit Adhäsionswirkung, z.B. ein Klebeband.

13. Vorrichtung nach einem der Ansprüche 1 bis 12, **gekennzeichnet durch** eine Besäumvorrichtung (15) mit einer einstellbaren Besäumbreite (19).

14. Vorrichtung nach Anspruch 13, **dadurch gekennzeichnet, daß** die Besäumvorrichtung (15) als Kreismesserschere mit zwei beidseits der senkrechten Mittelachse (20-20) des Transportgerätes (10) auf diesem angeordneten oberen Kreismessern (21, 22) ausgebildet ist, die zur Einstellung der Breite der von dem zu walzenden Bandmaterial (2) des Bandcoils (6) abzutrennenden Saumstreifen quer zur Bandlaufrichtung (a) verfahrbar und senkrecht zur Bandlaufebene (4-4) aus der Ruhestellung in die Betriebsstellung absenkbar sowie aus der Betriebsstellung in die Ruhestellung anhebbar sind und die mit den Untermessern (23) einer im Bandeinlauf (3) mit Abstand vor einem Walzgerüst (7) angeordneten Untermesserwelle (24) zusammenwirken.

15. Vorrichtung nach Anspruch 14, **dadurch gekennzeichnet, daß** die äußeren Abschnitte (24a, 24b) der Untermesserwelle (24) mit Untermessern (23) bestückt sind und der mittlere Abschnitt (24c) der Untermesserwelle (24) als Gegenrolle mit der Andrück- und Vortriebrolle (17) der Vorschub- und Haltevorrichtung (11) für den Bandanfang (12) zusammenwirkt.

16. Vorrichtung nach Anspruch 14 oder 15, **gekennzeichnet durch** einen Drehantrieb der oberen Kreismesser (21, 22) und/oder der Untermesserwelle (24) der Besäumvorrichtung (15).

17. Vorrichtung nach einem der Ansprüche 13 bis 16, **gekennzeichnet durch** Kappvorrichtungen zum Anschneiden der von dem Bandmaterial (2) abzutrennenden Saumstreifen.

18. Vorrichtung nach Anspruch 13, **dadurch gekennzeichnet, daß** die Besäumvorrichtung (15) als Brennschneidvorrichtung ausgebildet ist.

19. Vorrichtung nach einem der Ansprüche 13 bis 18, **gekennzeichnet durch** eine Absaugung der abgetrennten Saumstreifen.

20. Vorrichtung nach einem der Ansprüche 13 bis 18, **gekennzeichnet durch** eine Abführung der abgeschnittenen Saumstreifen **durch** Schwerkrafteinwirkung.

21. Vorrichtung nach einem der Ansprüche 13 bis 18, **gekennzeichnet durch** Aufwickeln der abgetrennten Saumstreifen.

22. Vorrichtung nach einem der Ansprüche 19 bis 21, **gekennzeichnet durch** eine Einstellung der Saumstreifenabführvorrichtung (25) quer zur Bandlaufrichtung (a) entsprechend der Besäumbreite (19) des Bandmaterials (2).

23. Vorrichtung nach einem der Ansprüche 1 bis 22, **gekennzeichnet durch** einen oder mehrere der Einführ- und Besäumvorrichtung (1) nachgeordnete Lufteintragetische (26, 31) zum Einführen des Bandanfangs (12) in den Walzspalt (16) eines Walzgerüstes (7).

## Claims

1. Device (1) for feeding single and double strip material (2) and trimming the strip edges for strip processing machines, in particular thin strip and foil rolling mills, with a motor-driven transport device (10), which can be moved in and against the running direction (a) of the strip in the region of the strip inlet (3) over the running plane (4-4) of the strip between a starting position (10a) above a dispenser (5) for a strip coil (6) and an end position (10b) at a distance in front of a roll stand (7), and attached to said transport device are an advancing and holding means (11) for the leading edge (12) of the strip of the strip coil (6) sitting on the drum (13) of the dispenser (5), a pick-up device (14) for the leading edge (12) of the strip and a trimming device (15) for the strip edges, wherein in the starting position (10a) of the transport device (10) the pick-up device (14) raises the leading edge (12) of the strip from the strip coil (6) stored on the dispenser (5) and in the end position (10b) of the transport device (10) advanced to the roll stand (7) the leading edge (12) of the strip is transferred from the pick-up device (14) to a transport means, e.g. an air feed table (26), located in front of the roll stand (7) and is transported into the roll gap (16) of the roll stand (7) as necessary with the assistance of the advancing and holding means (11) and then in the end position (10b) of the transport device (10) the trimming device (15) is moved into the operating position (15a).

2. Device according to Claim 1, **characterised by** a position-monitored and/or position-controlled drive motor for moving the transport device (10).

3. Device according to Claim 1 and 2, **characterised by** a locking or clamping of the transport device (10) in the advanced end position (10b), in which the trimming device (15) is moved out of the resting position into the operating position (15a).

4. Device according to Claim 3, **characterised by** an electric, hydraulic, pneumatic or mechanical locking or clamping of the transport device (10) in its advanced end position (10b).

5. Device according to Claim 1 or 2, **characterised by** a stop for fixing the transport device (10) in the end position (10b) for the operating position (15a) of the trimming device (15).

6. Device according to one of Claims 1 to 5, **characterised in that** the advancing and holding means (11) for the leading edge (12) of the strip comprises at least one pressing and feed roller (17) capable of being raised and lowered, which has a drive motor and is arranged transversely to the running direction (a) of the strip.

7. Device according to Claim 6, **characterised by** a plastic coating of the pressing and feed roller (17) with a specific adhesiveness.

8. Device according to one of Claim 1 to 7, **characterised in that** the strip pick-up device (14) comprises suction cups (18).

9. Device according to one of Claims 1 to 7, **characterised in that** the strip pick-up device (14) is configured as a motor-driven clamping device.

10. Device according to Claim 9, **characterised by** a pivoting ability of the clamping device.

11. Device according to one of Claims 1 to 7, **characterised by** a strip pick-up device (14) with an electrostatic method of operation.

12. Device according to one of Claims 1 to 7, **characterised by** a strip pick-up device (14) with adhesive action, e.g. an adhesive band.

13. Device according to one of Claims 1 to 12, **characterised by** a trimming device (15) with an adjustable trimming width (19).

14. Device according to Claim 13, **characterised in that** the trimming device (15) is configured as circular blade shears with two upper circular blades (21, 22), which are arranged on the transport device (10) on both sides of the perpendicular central axis (20-20) thereof and which can be moved transversely to the running direction (a) of the strip to adjust the width of the cutoff edges to be severed from the strip material (2) of the strip coil (6) to be rolled and can be lowered perpendicular to the running plane (4-4) of the strip from the resting position into the operating position and can also be raised out of the operating position into the resting position, and which cooperate with the lower blades (23) of a lower blade shaft (24) arranged at a distance in front of a roll stand (7) in the strip inlet (3).

15. Device according to Claim 14, **characterised in that** the outer sections (24a, 24b) of the lower blade shaft (24) are fitted with lower blades (23) and the central section (24c) of the lower blade shaft (24) cooperates as counter-roll with the pressing and feed roller (17) of the advancing and holding means (11) for the leading edge (12) of the strip.

16. Device according to Claim 14 or 15, **characterised by** a rotary drive of the upper circular blades (21, 22) and/or the lower blade shaft (24) of the trimming device (15).

17. Device according to one of Claims 13 to 16, **characterised by** clipping devices for cutting into the cutoff edges to be severed from the strip material (2).

18. Device according to Claim 13, **characterised in that** the trimming device (15) is configured as a flame cutting device.

19. Device according to one of Claims 13 to 18, **characterised by** an extraction of the severed cutoff edges.

20. Device according to one of Claims 13 to 18, **characterised by** a removal of the severed cutoff edges by the effect of gravity.

21. Device according to one of Claims 13 to 18, **characterised by** winding of the severed cutoff edges.

22. Device according to one of Claims 19 to 21, **characterised by** an adjustment of the cutoff edge removal device (25) transversely to the running direction (a) of the strip in accordance with the trimming width (19) of the strip material (2).

23. Device according to one of Claims 1 to 22, **characterised by** one or more air feed tables (26, 31) arranged downstream of the feeding and trimming device (1) for feeding the leading edge (12) of the strip into the roll gap (16) of a roll stand (7).

## Revendications

1. Dispositif(1) d'alimentation de feuillard (2) simple ou double et de cisaillage des rives pour des machines d'usinage de feuillard, en particulier des laminoirs à feuillard fin et des laminoirs à feuilles extra-minces, comprenant un appareil (10) de transport entraîné par moteur, qui peut être déplacé dans la région de l'entrée (3) de feuillard, au-dessus du plan (4-4) de déplacement du feuillard, dans le sens (a) de déplacement du feuillard et en sens contraire, entre une position (10a) initiale au-dessus d'un dévidoir (5) pour une bobine (6) de feuillard et une position (10b) finale à distance devant une cage (7) de laminoir, appareil sur lequel sont installés un équipement (11) d'avancement et de maintien pour le début (12) de la bobine (6) de feuillard montée sur le tambour (13) du dévidoir (5), un dispositif (14) récepteur pour le début (12) du feuillard et un dispositif (15) de cisaillage pour les rives du feuillard, sachant que, dans la position (10a) initiale de l'appareil (10) de transport, le dispositif (14) récepteur relève le début (12) du feuillard à l'écart de la bobine (6) de feuillard montée sur le dévidoir (5), et sachant que, dans la position (10b) finale, avancée vers la cage (7) de laminoir, de l'appareil (10) de transport, le début (12) du feuillard est transféré par le dispositif (14) récepteur à un équipement de transport disposé avant la cage (7) de laminoir, par exemple à une table (26) d'introduction pneumatique et transporté, au besoin avec l'assistance de l'équipement (11) d'avancement et de maintien, dans l'emprise (16) de la cage (7) de laminoir, et sachant qu'ensuite, dans la position (10b) finale de l'appareil (10) de transport, le dispositif (15) de cisaillage des rives est mis dans la position(15a) de service.

2. Dispositif suivant la revendication 1, **caractérisé par** un moteur d'entraînement à surveillance et/ou régulation de position pour le déplacement de l'appareil (10) de transport.

3. Dispositif suivant les revendications 1 et 2, **caractérisé par** un verrouillage ou serrage de l'appareil (10) de transport dans la position (10b) finale avancée, dans laquelle le dispositif (15) de cisaillage des rives est déplacé de la position de repos à la position (15a) de service.

4. Dispositif suivant la revendication 3, **caractérisé par** un verrouillage ou serrage électrique, hydraulique, pneumatique ou mécanique de l'appareil (10) de transport dans sa position (10b) finale avancée.

5. Dispositif suivant la revendication 1 ou 2, **caractérisé par** une butée pour immobiliser l'appareil (10) de transport dans la position (10b) finale pour la position (15a.) de service du dispositif (15) de cisaillage des rives.

6. Dispositif suivant l'une des revendications 1 à 5, **caractérisé en ce que** l'équipement (11) d'avancement et de maintien pour le début (12) du feuillard est constitué d'au moins un rouleau (17) de pression et d'avancement pouvant être relevé et abaissé et doté d'un moteur d'entraînement, rouleau qui est disposé transversalement au sens (a) de déplacement du feuillard.

7. Dispositif suivant la revendication 6, **caractérisé par** un revêtement en matière plastique du rouleau (17) de pression et d'avancement ayant une adhésivité donnée.

8. Dispositif suivant l'une des revendications 1 à 7, **caractérisé en ce que** le dispositif (14) récepteur de feuillard est constitué de ventouses (18).

9. Dispositif suivant l'une des revendications 1 à 7, **caractérisé en ce que** le dispositif (14) récepteur de feuillard est réalisé sous la forme d'un dispositif de serrage entraîné par moteur.

10. Dispositif suivant la revendication 9, **caractérisé par** une faculté de pivotement du dispositif de serrage.

11. Dispositif suivant l'une des revendications 1 à 7, **caractérisé par** un dispositif (14) récepteur de feuillard à fonctionnement électrostatique.

12. Dispositif suivant l'une des revendications 1 à 7, **caractérisé par** un dispositif (14) récepteur de feuillard à effet adhésif, par exemple une bande adhésive.

13. Dispositif suivant l'une des revendications 1 à 12, **caractérisé par** un dispositif (15) de cisaillage des rives ayant une largeur (19) réglable de cisaillage des rives.

14. Dispositif suivant la revendication 13, **caractérisé en ce que** le dispositif (15) de cisaillage des rives est réalisé sous la forme d'une cisaille à lames circulaires dotée de deux lames (21, 22) circulaires supérieures disposées sur l'appareil (10) de transport de part et d'autre du plan (20-20) médian vertical de ce dernier, lames qui, afin de régler la largeur des bandes de rives à détacher du feuillard (2) à laminer de la bobine (6) de feuillard, peuvent être déplacées transversalement au sens (a) de déplacement du feuillard et abaissées perpendiculairement au plan (4-4) de déplacement du feuillard à la position de repos à la position de service ainsi que relevées de la position de service à la position de repos, et qui coopèrent avec les lames (23) inférieures d'un arbre (24) de lames inférieures disposé dans l'entrée (3) de feuillard à distance devant une cage (7) de laminoir.

15. Dispositif suivant la revendication 14, **caractérisé en ce que** les parties (24a, 24b) extérieures de l'arbre (24) de lames inférieures sont équipées de lames (23) inférieures, et la partie (24c) centrale de l'arbre (24) de lames inférieures coopère en tant que contre-rouleau avec le rouleau (17) de pression et d'avancement de l'équipement (11) d'avancement et de maintien pour le début (12) du feuillard.

16. Dispositif suivant la revendication 14 ou 15, **caractérisé par** un entraînement en rotation des lames (21, 22) circulaires supérieures et/ou de l'arbre (24) de lames inférieures du dispositif (15) de cisaillage des rives.

17. Dispositif suivant l'une des revendications 13 à 16, **caractérisé par** des dispositifs d'éboutage pour entamer les bandes de rives à détacher du feuillard (2).

18. Dispositif suivant la revendication 13, **caractérisé en ce que** le dispositif (15) de cisaillage des rives est réalisé sous forme de dispositif d'oxycoupage.

19. Dispositif suivant l'une des revendications 13 à 18, **caractérisé par** une évacuation par aspiration des bandes de rives détachées.

20. Dispositif suivant l'une des revendications 13 à 18, **caractérisé par** une évacuation sous l'action de la gravité des bandes de rives détachées.

21. Dispositif suivant l'une des revendications 13 à 18, **caractérisé par** l'enroulement des bandes de rives détachées.

22. Dispositif suivant l'une des revendications 19 à 21, **caractérisé par** un réglage du dispositif (25) d'évacuation des bandes de rives transversalement au sens (a) de déplacement du feuillard en fonction de la largeur (19) de cisaillage des rives du feuillard (2).

23. Dispositif suivant l'une des revendications 1 à 22, **caractérisé par** une ou plusieurs tables (26, 31) d'introduction pneumatique disposées à la suite du dispositif (1) d'alimentation et de cisaillage des rives afin d'introduire le début (12) du feuillard dans l'emprise (16) d'une cage (7) de laminoir.
